# FASCICULE DE BREVET EUROPEEN

(11) **EP 2 251 221 B1**
(45) Date de publication et mention de la délivrance du brevet: **24.04.2013**
(21) Numéro de dépôt: 10162282.7
(22) Date de dépôt: 07.05.2010
(51) Int. Cl.: B60H 1/32

(54) **Installation de ventilation, de chauffage et/ou de climatisation comprenant quatre échangeurs de chaleur**
Belüftungs-, Heizungs-, und/oder Klimatisierungsanordnung umfassend vier Wärmetauscher
Heating, ventilating and/or air conditioning device comprising four heat exchangers

(30) Priorité: 13.05.2009 FR 0902309
(43) Date de publication de la demande: 17.11.2010
(73) Titulaire: Valeo Systèmes Thermiques, 78321 Le Mesnil Saint Denis (FR)
(72) Inventeur: Haller, Regine, 78490, BOISSY SANS AVOIR (FR); Yahia, Mohamed, 75005, PARIS (FR); Nicolas, Bertrand, 78990, ELANCOURT (FR)

(56) Documents cités:
- DE-A1- 19 724 644
- FR-A- 2 875 743
- US-A1- 2008 041 071

## Description

### Domaine technique de l'invention.

L'invention est du domaine des installations de ventilation, de chauffage et/ou de climatisation d'un véhicule automobile. Elle a pour objet une telle installation.

### Etat de la technique.

Un véhicule automobile est couramment équipé d'une installation de ventilation, de chauffage et/ou de climatisation pour modifier les paramètres aérothermiques de l'air contenu à l'intérieur de l'habitacle du véhicule. Cette modification est obtenue à partir de la délivrance à l'intérieur de l'habitacle d'au moins un flux d'air. L'installation comprend un boîtier qui est réalisé en matière plastique et qui est disposé sous une planche de bord du véhicule. Le boîtier est agencé pour canaliser la circulation du flux d'air depuis au moins une bouche d'admission d'air vers au moins une bouche d'évacuation d'air.

Pour refroidir le flux d'air préalablement à sa délivrance à l'intérieur de l'habitacle, l'installation comprend une boucle de climatisation à l'intérieur de laquelle circule un fluide réfrigérant, tel que du dioxyde de carbone connu sous l'appellation R744. Dans sa généralité, la boucle de climatisation comprend au moins un compresseur, un évaporateur et un échangeur de chaleur, appelé refroidisseur de gaz. Le compresseur est apte à porter le fluide réfrigérant à haute pression. L'échangeur de chaleur est agencé pour que le fluide réfrigérant cède de la chaleur à un autre fluide traversant l'échangeur de chaleur. L'évaporateur est prévu pour refroidir le flux d'air.

Le document US 2008/0041071 (DENSO CORPORATION) décrit une telle boucle de climatisation comprenant deux échangeurs de chaleur disposés l'un à la suite de l'autre sur la boucle de climatisation. Un échangeur de chaleur amont est destiné à permettre un échange de chaleur entre le fluide réfrigérant à haute pression et un liquide de refroidissement circulant à l'intérieur d'un circuit de refroidissement d'un moteur thermique équipant le véhicule. Un échangeur de chaleur aval, disposé en aval de l'échangeur de chaleur amont selon un sens de circulation du fluide réfrigérant à l'intérieur de la boucle de climatisation, est destiné à permettre un échange de chaleur entre le fluide réfrigérant en provenance de l'échangeur de chaleur amont et un liquide caloporteur circulant à l'intérieur d'une boucle secondaire.

Dans certaines conditions d'utilisation du véhicule, il est utile de récupérer la chaleur transmise par le fluide réfrigérant à haute pression au liquide de refroidissement et/ou au liquide caloporteur pour réchauffer le flux d'air préalablement à sa délivrance à l'intérieur de l'habitacle. A cet effet, le boitier comporte un canal à l'intérieur duquel sont disposés un premier échangeur de chaleur sur l'air participant de la boucle secondaire et un second échangeur de chaleur sur l'air participant du circuit de refroidissement. Le flux d'air traverse le premier échangeur de chaleur sur l'air, puis le second échangeur de chaleur sur l'air selon un sens d'écoulement du flux d'air à l'intérieur du canal.

Une telle architecture présente de nombreux inconvénients.

Le fluide réfrigérant subit à l'intérieur de la boucle de climatisation un cycle thermodynamique couramment décrit dans un diagramme de Mollier. Il est connu de déduire de ce diagramme un coefficient de performance de ladite boucle, désigné par l'acronyme anglais « COP » et défini comme étant le rapport entre une puissance utile récupérée par les échangeurs de chaleur et une énergie consommée par le compresseur pour comprimer le fluide réfrigérant. Il est constamment recherché que le coefficient de performance « COP » soit le plus élevé possible, par exemple de l'ordre de 3 à 4, pour procurer à un utilisateur du véhicule un confort thermique optimisé, pour une énergie consommée minimale. L'architecture proposée par le document US 2008/0041071 mérite d'être améliorée pour obtenir un « COP » le plus élevé possible, notamment compris entre 3 et 4, tout en simplifiant l'installation.

Une telle architecture n'est pas adaptée pour permettre à la fois l'obtention d'un « COP » élevé tout en procurant un échauffement efficace et rapide du flux d'air.

Le document FR 2 875 743, qui est considéré comme l'art antérieur le plus proche, décrit une autre installation d'un type connu.

### Objet de l'invention.

Le but de la présente invention est de proposer une installation de ventilation, de chauffage et/ou de climatisation comprenant une boucle de climatisation pour refroidir un flux d'air, la boucle de climatisation offrant un coefficient de performance « COP » le plus élevé possible, notamment compris entre 3 et 4, la dite installation étant toutefois la plus simple possible et permettant, le cas échéant, un échauffement rapide et efficace du flux d'air.

L'installation de la présente invention est une installation de ventilation, de chauffage et/ou de climatisation comprenant une boucle de climatisation à l'intérieur de laquelle circule un fluide réfrigérant et une boucle secondaire à l'intérieur de laquelle circule un fluide caloporteur. Ladite installation comprend un premier échangeur de chaleur entre le fluide réfrigérant FR et le fluide caloporteur FC, un deuxième échangeur de chaleur entre le fluide réfrigérant FR et le fluide caloporteur FC. La boucle secondaire comprenant un troisième échangeur de chaleur entre le fluide caloporteur FC et l'air, et un quatrième échangeur de chaleur entre le fluide caloporteur FC et l'air. La boucle secondaire comprend au moins un moyen de dérivation du fluide caloporteur FC depuis un point de sortie du fluide caloporteur FC hors du troisième échangeur de chaleur vers un point d'admission du fluide caloporteur FC à l'intérieur du quatrième échangeur de chaleur.

Suivant l'invention, le Le point de sortie est raccordé à un point médian situé sur la boucle secondaire entre le premier échangeur de chaleur et le deuxième échangeur de chaleur.

Le moyen de dérivation est par exemple constitué d'un canal agencé en « Y » comprenant une entrée E du fluide caloporteur FC qui est raccordée au point de sortie, une première sortie qui est raccordée au point médian et une deuxième sortie qui est raccordée à un point d'admission du fluide caloporteur FC à l'intérieur du quatrième échangeur de chaleur.

Le premier échangeur de chaleur est préférentiellement disposé en amont du deuxième échangeur de chaleur selon un sens de circulation du fluide réfrigérant FR à l'intérieur de la boucle de climatisation.

Le troisième échangeur de chaleur comporte avantageusement un point d'entrée du fluide caloporteur FC qui est en relation fluidique avec un orifice d'évacuation du fluide caloporteur FC hors du premier échangeur de chaleur.

L'installation comporte notamment des premiers moyens de maintien d'un premier débit du fluide caloporteur FC, pris entre le point d'entrée et le point de sortie, entre 120 l/h et 300 l/h.

Les premiers moyens de maintien comprennent par exemple un agencement en au moins deux passes d'un premier chemin de circulation du fluide caloporteur FC à l'intérieur du troisième échangeur de chaleur.

Les premiers moyens de maintien comprennent plus particulièrement un agencement en au moins quatre passes dudit premier chemin de circulation.

Les premiers moyens de maintien comprennent par exemple encore une restriction de circulation du fluide caloporteur FC, la restriction étant ménagée en amont du point d'admission.

L'installation comporte préférentiellement des deuxièmes moyens de maintien d'un deuxième débit du fluide caloporteur FC, pris entre le point d'admission et un point d'évacuation du fluide caloporteur FC hors du quatrième échangeur de chaleur, entre 40 l/h et 120 l/h.

L'installation comprend avantageusement un premier canal logeant le quatrième échangeur de chaleur et au moins une première portion du troisième échangeur de chaleur.

Le premier canal comporte de préférence une bouche d'admission d'air extérieur en relation avec l'extérieur du véhicule.

L'installation comprend avantageusement un deuxième canal comportant une bouche d'admission d'air de recyclage en relation avec l'habitacle du véhicule.

Le deuxième canal loge de préférence une deuxième portion du troisième échangeur de chaleur.

Selon diverses variantes, la deuxième portion est indifféremment dissociée ou solidaire de la première portion.

### Description des figures.

La présente invention sera mieux comprise à la lecture de la description qui va en être faite d'exemples de réalisation, en relation avec les figures des planches annexées, dans lesquelles :

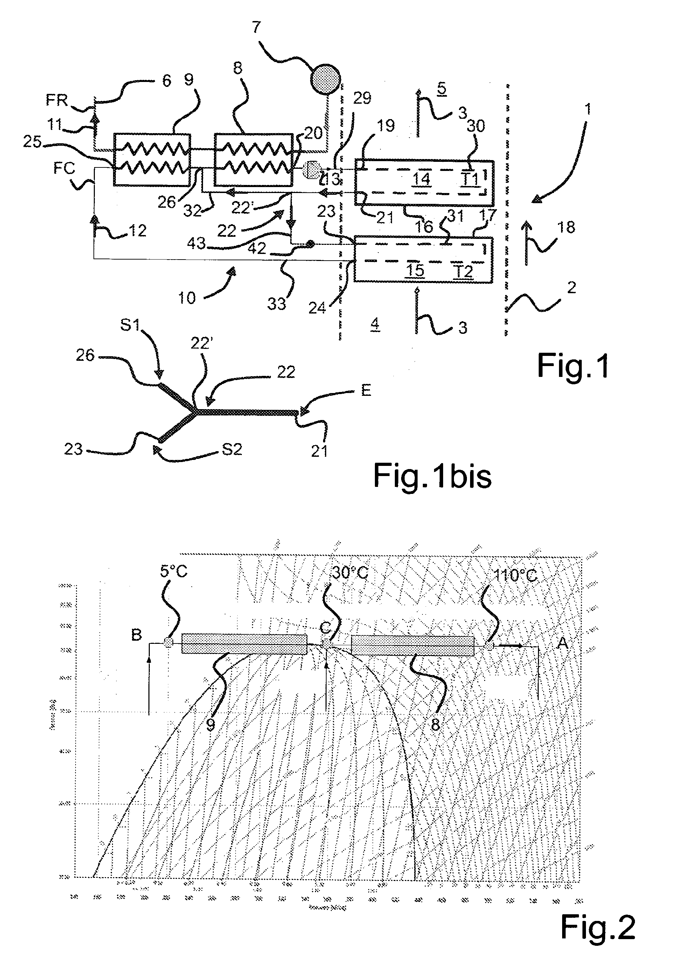

La fig.1 est une illustration schématique partielle d'une installation de la présente invention.
La fig.1 bis est une vue de détail de l'installation représentée sur la fig.1.
La fig.2 est un diagramme de Mollier illustrant partiellement un cycle thermodynamique que subit un fluide réfrigérant FR circulant à l'intérieur d'une boucle de climatisation participante de l'installation illustrée sur la fig.1.
Les fig.3 et fig.4 sont des vues schématiques de variantes de réalisation respectives de l'installation illustrée sur la fig.1.

Sur la fig.1, un véhicule automobile est équipé d'une installation de ventilation, de chauffage et/ou de climatisation 1 pour modifier les paramètres aérauliques de l'air contenu à l'intérieur de l'habitacle du véhicule. L'installation 1 comprend un boîtier 2 réalisé en matière plastique pour canaliser un flux d'air 3 circulant entre une bouche d'admission d'air 4 et une bouche d'évacuation d'air 5 que comporte le boîtier 2.

Pour refroidir le flux d'air 3, l'installation 1 comprend une boucle de climatisation 6 à l'intérieur de laquelle circule un fluide réfrigérant FR. Ce dernier est préférentiellement du dioxyde de carbone, connu sous l'appellation R744. De manière connue, la boucle de climatisation 6 comporte un compresseur 7 pour porter à haute pression et à haute température le fluide réfrigérant FR. La boucle de climatisation 6 comporte également un premier échangeur de chaleur fluide/fluide 8 et un deuxième échangeur de chaleur fluide/fluide 9 qui sont destinés l'un et l'autre à permettre au fluide réfrigérant FR de céder de la chaleur à un fluide caloporteur FC circulant à l'intérieur d'une boucle secondaire 10. A l'intérieur de la boucle de climatisation 6, le fluide réfrigérant FR circule depuis le compresseur 7 vers le premier échangeur de chaleur 8, puis vers le deuxième échangeur de chaleur 9 selon un sens de circulation 11 du fluide réfrigérant FR à l'intérieur de la boucle de climatisation 6. A l'intérieur de la boucle secondaire 10, le fluide caloporteur FC circule depuis le deuxième échangeur de chaleur 9 vers le premier échangeur de chaleur 8 selon un sens d'acheminement 12 du fluide caloporteur FC à l'intérieur de la boucle secondaire 10.

Le premier échangeur de chaleur 8 et le deuxième échangeur de chaleur 9 sont chacun agencés pour permettre un échange de chaleur direct entre le fluide caloporteur FC et le fluide réfrigérant FR, sans avoir recours à un échange de chaleur entre le fluide caloporteur FC et l'air et/ou un échange de chaleur entre le fluide réfrigérant FR et l'air.

La boucle de climatisation 6 comprend également un organe de détente et un évaporateur non représentés sur les figures. L'évaporateur est logé à l'intérieur du boîtier 2 pour permettre un refroidissement du flux d'air 3 qui le traverse. De préférence, la boucle de climatisation 6 comporte également un échangeur de chaleur interne et un accumulateur de fluide réfrigérant FR. La boucle de climatisation 6 est susceptible de comprendre d'autres éléments, tels que des vannes pour contrôler la circulation du fluide réfrigérant FR à l'intérieur de la boucle de climatisation 6.

La boucle secondaire 10 comporte une pompe 13 pour faire circuler le fluide caloporteur FC, la pompe 13 étant préférentiellement disposée en sortie du premier échangeur de chaleur 8 selon le sens d'acheminement 12 du fluide caloporteur FC.

La boucle secondaire 10 comporte un troisième échangeur de chaleur sur l'air 14 et un quatrième échangeur de chaleur sur l'air 15 qui sont disposés en vis-à-vis l'un de l'autre à l'intérieur du boîtier 2 de l'installation 1, de manière à être successivement traversés par le flux d'air 3. Les échangeurs de chaleur sur l'air 14,15 sont agencés pour permettre un échange de chaleur entre le fluide caloporteur FC et le flux d'air 3. Les échangeurs de chaleur sur l'air 14,15 relèvent donc d'une technologie différente de celles des échangeurs de chaleur fluide/fluide 8,9 précédemment décrits.

Le troisième échangeur de chaleur 14 comporte une face d'entrée d'air 16 qui est placée en regard d'une face de sortie d'air 17 que comporte le quatrième échangeur de chaleur 15. Autrement dit, selon un sens d'écoulement 18 du flux d'air 3 à l'intérieur du boîtier 2, le flux d'air 3 en provenance de la bouche d'admission d'air 4 traverse le troisième échangeur de chaleur 15 et quitte ce dernier par l'intermédiaire de la face de sortie 17, pour circuler à l'intérieur du boîtier 2 vers le troisième échangeur de chaleur 14. Le flux d'air 3 traverse alors le troisième échangeur de chaleur 14 en pénétrant ce dernier par l'intermédiaire de la face d'entrée 16. De préférence, la face d'entrée d'air 16 du troisième échangeur de chaleur 14 est sensiblement parallèle à la face de sortie d'air 17 du quatrième échangeur de chaleur 15. Ces dispositions sont telles que suite à une admission du flux d'air 3 à l'intérieur du boîtier 2, le flux d'air 3 est en premier lieu réchauffé par le quatrième échangeur de chaleur 15, puis est réchauffé par le troisième échangeur de chaleur 14, à l'intérieur duquel le fluide caloporteur FC est à une première température T1 qui est supérieure à une température T2 du fluide caloporteur FC à l'intérieur du quatrième échangeur de chaleur 15.

Le troisième échangeur de chaleur 14 comporte un point d'entrée 19 de fluide caloporteur FC à l'intérieur du troisième échangeur de chaleur 14. Le point d'entrée 19 est en relation fluidique avec un orifice d'évacuation 20 du fluide caloporteur FC hors du premier échangeur de chaleur 8. Selon l'exemple illustré, cette relation fluidique est établie par l'intermédiaire de la pompe 13.

Le troisième échangeur de chaleur 14 comporte un point de sortie 21 de fluide caloporteur FC hors du troisième échangeur de chaleur 14, de telle sorte qu'à l'intérieur du troisième échangeur de chaleur 14, le fluide caloporteur FC s'écoule à l'intérieur d'un chemin de circulation principal 30 ménagé entre le point d'entrée 19 et le point de sortie 21.

Le point de sortie 21 du troisième échangeur de chaleur 14 est en relation fluidique avec un moyen de dérivation 22 du fluide caloporteur FC soit vers un point médian 26 de la boucle secondaire 10, soit vers un point d'admission 23 de fluide caloporteur FC à l'intérieur du quatrième échangeur de chaleur 15. Le point médian 26 est interposé entre le premier échangeur de chaleur 8 et le deuxième échangeur de chaleur 9.

Plus particulièrement sur la fig.1 bis, le moyen de dérivation 22 est constitué d'un canal agencé en Y comprenant une entrée E de fluide caloporteur FC, une première sortie S1 de fluide caloporteur FC et une deuxième sortie S2 de fluide caloporteur FC. L'entrée E est raccordée au point de sortie 21 du troisième échangeur de chaleur 14. La première sortie S1 est raccordée au point médian 26. La deuxième sortie S2 est raccordée au point d'admission 23 du quatrième échangeur de chaleur 15. La séparation du fluide caloporteur FC vers la première sortie S1 ou vers la deuxième sortie S2 s'effectue en un point de dérivation 22'. Ces dispositions sont telles qu'en sortie du troisième échangeur de chaleur 14, et plus particulièrement au point de dérivation 22', le fluide caloporteur FC est soit ramené au premier échangeur de chaleur 8 pour y être réchauffé, soit dirigé vers le quatrième échangeur de chaleur 15 pour réchauffer le flux d'air 3.

A l'intérieur du troisième échangeur de chaleur 14, le fluide caloporteur FC circule à l'intérieur d'un chemin de circulation secondaire 31 qui s'étend depuis le point d'admission 23 vers un point d'évacuation 24 de fluide caloporteur FC que comporte le troisième échangeur de chaleur 14. Le point d'évacuation 24 du troisième échangeur de chaleur 14 est en relation avec un point d'arrivée 25 de fluide caloporteur FC à l'intérieur du deuxième échangeur de chaleur 9.

Il résulte de ces dispositions que le flux d'air 3 est à même d'être réchauffé à deux reprises, une première fois lors de son contact avec le chemin de circulation principal 30 et une deuxième fois lors de son contact avec le chemin de circulation secondaire 31. Pour optimiser l'échange de chaleur entre le fluide caloporteur FC et l'air, le chemin de circulation principal 30 comporte au moins deux passes, voire quatre passes ou plus. Le nombre de passe du chemin de circulation principal 30 correspond au nombre de points d'intersection entre le chemin de circulation principal 30 et le flux d'air 3 traversant le troisième échangeur de chaleur 14. Une restriction 42 est ménagée entre le point de dérivation 22' et le point d'entrée 23 pour freiner le passage du fluide caloporteur FC et ralentir son débit en entrée du quatrième échangeur de chaleur 15. Une telle restriction 42 est par exemple conformée en un goulot d'étranglement, une diminution de diamètre d'une canalisation 43 reliant le point de dérivation 22' et le point d'entrée 23 ou analogue.

La boucle secondaire 10 comprend une branche principale 29 qui s'étend depuis le point médian 26 jusqu'au point de dérivation 22'. La branche principale 29 comprend le premier échangeur de chaleur 8, la pompe 13 et le chemin de circulation principal 30. La branche principale 29 comporte des moyens pour réguler le débit du fluide caloporteur FC entre 120 l/h et 300 l/h.

Au niveau du point de dérivation 22', la branche principale 29 se divise en une première branche secondaire 32 et une deuxième branche secondaire 33. La première branche secondaire 32 relie le point de dérivation 22' au point médian 26. La deuxième branche secondaire 33 comprend le chemin de circulation secondaire 31 et le deuxième échangeur de chaleur 9.

A l'intérieur de la première branche secondaire 32, le fluide caloporteur FC circule à un débit compris entre 80 l/h et 180 l/h. Ces dispositions visent à permettre un retour rapide du fluide caloporteur FC au premier échangeur de chaleur 8, en vue d'un réchauffement rapide du fluide caloporteur FC.

A l'intérieur de la deuxième branche secondaire 33, le fluide caloporteur FC circule à un débit compris entre 40 l/h et 120 l/h. Ces dispositions visent à permettre un réchauffement optimisé du flux d'air 3 au contact du chemin de circulation secondaire 31.

Il résulte finalement de ces dispositions un meilleur compromis entre un échauffement rapide du fluide caloporteur FC, notamment à l'intérieur du premier échangeur de chaleur 8, et un refroidissement rapide du fluide caloporteur FC à l'intérieur du troisième échangeur de chaleur 14 et du quatrième échangeur de chaleur 15, en vue d'un réchauffement rapide du flux d'air 3.

L'ensemble de ces dispositions est tel que l'échange de chaleur entre le fluide réfrigérant FR et le fluide caloporteur FC est optimisé, tout en permettant l'obtention d'un « COP » élevé, par exemple compris entre 3 et 4. Sur la fig.2 qui illustre dans un diagramme de Mollier, un cycle thermodynamique que subit le fluide réfrigérant FR à l'intérieur de la boucle de climatisation 6, le refroidissement isobare (AB) correspond au changement thermodynamique que subit le fluide réfrigérant FR successivement à l'intérieur du premier échangeur de chaleur 8, puis à l'intérieur du deuxième échangeur de chaleur 9. Le refroidissement isobare (AB) est la somme du premier refroidissement isobare (AC) qui se produit à l'intérieur du premier échangeur de chaleur 8 et du deuxième refroidissement isobare (CB) qui a lieu à l'intérieur du deuxième échangeur de chaleur 9. Au point A, à savoir en entrée du premier échangeur de chaleur 8, le fluide réfrigérant est à 110°C. Au point B, à savoir entre la sortie du premier échangeur de chaleur 8 et l'entrée du deuxième échangeur de chaleur 9, le fluide réfrigérant est à 30°C. Au point C, à savoir en sortie du deuxième échangeur de chaleur 9, le fluide réfrigérant est à 5°C. Ce résultat est atteint par les dispositions de la présente invention, à partir d'une diminution du débit du fluide caloporteur FC à l'intérieur du deuxième échangeur de chaleur 9, pour refroidir au maximum le fluide réfrigérant FR en sortie du deuxième échangeur de chaleur 9, soit au point B.

Les dispositions de la présente invention permettent l'obtention d'un tel coefficient de performance élevé en raison d'un abaissement maximum de la température du fluide réfrigérant FR en sortie du deuxième échangeur de chaleur 9. Or la température du fluide réfrigérant FR en sortie du deuxième échangeur de chaleur 9 est liée à la température du fluide caloporteur FC en entrée du deuxième échangeur de chaleur 9, soit au point d'arrivée 25. Or la température du fluide caloporteur FC en entrée du deuxième échangeur de chaleur 9 est bornée par la température du flux d'air 3 traversant le quatrième échangeur de chaleur 15. La présente invention permet un abaissement de la température du fluide réfrigérant FR en sortie du deuxième échangeur de chaleur 9 à partir d'une diminution du débit de fluide caloporteur FC à l'intérieur du quatrième échangeur de chaleur 15.

Les dispositions de la présente invention permettent l'obtention d'un tel coefficient de performance élevé en raison aussi du fait que le débit du fluide caloporteur FC à l'intérieur du troisième échangeur de chaleur 14 est élevé, ce qui permet un échauffement optimisé du flux d'air 3. Cet échauffement est possible notamment en raison d'un nombre élevé de passes du fluide caloporteur FC que comporte le chemin de circulation principal 30, mais aussi en raison d'un préchauffage du fluide caloporteur FC par le quatrième échangeur de chaleur 15.

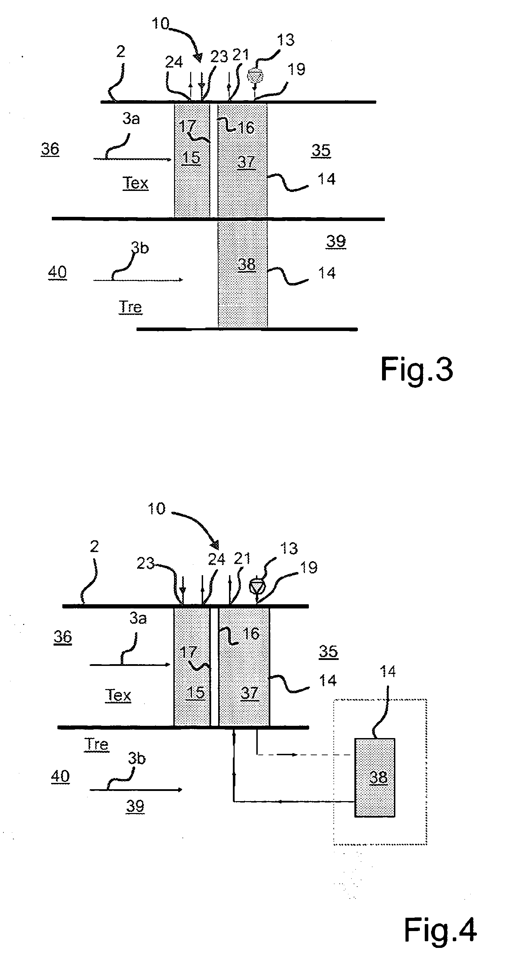

Sur les fig.3 et fig.4, l'installation 1 comprend un premier canal 35 et un deuxième canal 39 constitutifs du boîtier 2. Le premier canal 35 est pourvu d'une bouche d'admission d'air extérieur 36 à travers laquelle est admis un flux d'air extérieur 3a, en provenance de l'extérieur du véhicule. Au niveau de la bouche d'admission d'air extérieur 36, le flux d'air extérieur 3a présente une température Tex par exemple de l'ordre de -18°C. Le deuxième canal 39 est pourvu d'une bouche d'admission d'air de recyclage 40 à travers laquelle est admis un flux d'air de recyclage 3b, en provenance de l'habitacle du véhicule. Au niveau de la bouche d'admission d'air de recyclage 40, le flux d'air de recyclage 3b présente une température de recyclage Tre par exemple de l'ordre de 22°C à 25°C.

Le flux d'air extérieur 3a circule à l'intérieur du premier canal 35 pour traverser successivement le quatrième échangeur de chaleur 15 et une première portion 37 du troisième échangeur de chaleur 14.

Le flux d'air de recyclage 3b circule à l'intérieur du deuxième canal 39 pour traverser une deuxième portion 38 du quatrième échangeur de chaleur 15.

Sur la fig.3, la deuxième portion 38 du premier échangeur de chaleur 14 est solidaire de la première portion 37 du premier échangeur de chaleur 14.

Sur la fig.4, la deuxième portion 38 du premier échangeur de chaleur 14 est désolidarisée de la première portion 37 du premier échangeur de chaleur 14. La première portion 37 et la deuxième portion 38 sont placées en série l'une par rapport à l'autre, la deuxième portion 38 étant susceptible d'être placée en un endroit du véhicule où elle n'est traversée que par de l'air de recyclage, par exemple à l'arrière du véhicule.

## Revendications

1. Installation de ventilation, de chauffage et/ou de climatisation (1) comprenant une boucle de climatisation (6) à l'intérieur de laquelle circule un fluide réfrigérant FR et une boucle secondaire (10) à l'intérieur de laquelle circule un fluide caloporteur FC, ladite installation (1) comprenant un premier échangeur de chaleur (8) entre le fluide réfrigérant FR et le fluide caloporteur FC, un deuxième échangeur de chaleur (9) entre le fluide réfrigérant FR et le fluide caloporteur FC, la boucle secondaire (10) comprenant un troisième échangeur de chaleur (14) entre le fluide caloporteur FC et l'air, et un quatrième échangeur de chaleur (15) entre le fluide caloporteur FC et l'air, la boucle secondaire (10) comprenant au moins un moyen de dérivation (22) du fluide caloporteur FC depuis un point de sortie (21) du fluide caloporteur FC hors du troisième échangeur de chaleur (14) vers un point d'admission (23) du fluide caloporteur FC à l'intérieur du quatrième échangeur de chaleur (15), **caractérisée en ce que** le point de sortie (21) est raccordé à un point médian (26) situé sur la boucle secondaire (10) entre le premier échangeur de chaleur (8) et le deuxième échangeur de chaleur (9).

2. Installation (1) selon la revendication 1, **caractérisée en ce que** le moyen de dérivation (22) est constitué d'un canal agencé en « Y » comprenant une entrée E du fluide caloporteur FC qui est raccordée au point de sortie (21), une première sortie S1 qui est raccordée au point médian (26) et une deuxième sortie S2 qui est raccordée à un point d'admission (23) du fluide caloporteur FC à l'intérieur du quatrième échangeur de chaleur (15).

3. Installation (1) selon l'une quelconque des revendications précédentes, **caractérisée en ce que** le premier échangeur de chaleur (8) est disposé en amont du deuxième échangeur de chaleur (9) selon un sens de circulation (11) du fluide réfrigérant FR à l'intérieur de la boucle de climatisation (6).

4. Installation (1) selon l'une quelconque des revendications précédentes, **caractérisée en ce que** le troisième échangeur de chaleur (14) comporte un point d'entrée (19) du fluide caloporteur FC qui est en relation fluidique avec un orifice d'évacuation (20) du fluide caloporteur FC hors du premier échangeur de chaleur (8).

5. Installation (1) selon la revendication 4, **caractérisée en ce que** l'installation (1) comporte des premiers moyens de maintien d'un premier débit du fluide caloporteur FC, pris entre le point d'entrée (19) et le point de sortie (21), entre 120 l/h et 300 l/h.

6. Installation (1) selon la revendication 5, **caractérisée en ce que** les premiers moyens de maintien comprennent un agencement en au moins deux passes d'un premier chemin de circulation (30) du fluide caloporteur FC à l'intérieur du troisième échangeur de chaleur (14).

7. Installation (1) selon la revendication 6, **caractérisée en ce que** les premiers moyens de maintien comprennent un agencement en au moins quatre passes dudit premier chemin de circulation (30).

8. Installation (1) selon l'une quelconque des revendications 5 à 7, **caractérisée en ce que** les premiers moyens de maintien comprennent une restriction (42) de circulation du fluide caloporteur FC, la restriction (42) étant ménagée en amont du point d'admission (23).

9. Installation (1) selon l'une quelconque des revendications 2 à 8, **caractérisée en ce que** l'installation (1) comporte des deuxièmes moyens de maintien d'un deuxième débit du fluide caloporteur FC, pris entre le point d'admission (23) et un point d'évacuation (24) du fluide caloporteur FC hors du quatrième échangeur de chaleur (15), entre 40 l/h et 120 l/h.

10. Installation (1) selon l'une quelconque des revendications précédentes, **caractérisée en ce que** l'installation (1) comprend un premier canal (35) logeant le quatrième échangeur de chaleur (15) et au moins une première portion (37) du troisième échangeur de chaleur (14).

11. Installation (1) selon la revendication 10, **caractérisée en ce que** le premier canal (35) comporte une bouche d'admission d'air extérieur (36) en relation avec l'extérieur du véhicule.

12. Installation (1) selon l'une quelconque des revendications 10 et 11, **caractérisée en ce que** l'installation (1) comprend un deuxième canal (39) comportant une bouche d'admission d'air de recyclage (43) en relation avec l'habitacle du véhicule.

13. Installation (1) selon la revendication 12, **caractérisée en ce que** le deuxième canal (39) loge une deuxième portion (38) du troisième échangeur de chaleur (14).

14. Installation (1) selon la revendication 13, **caractérisée en ce que** la deuxième portion (38) est indifféremment dissociée ou solidaire de la première portion (37).

## Claims

1. Heating, ventilation and/or air conditioning installation (1) comprising an air-conditioning loop (6) through which there circulates a refrigerant FR, and a secondary loop (10) through which there circulates a coolant FC, the said installation (1) comprising a first heat exchanger (8) exchanging heat between the refrigerant FR and the coolant FC, a second heat exchanger (9) exchanging heat between the refrigerant FR and the coolant FC, the secondary loop (10) comprising a third heat exchanger (14) exchanging heat between the coolant FC and the air, and a fourth heat exchanger (15) exchanging heat between the coolant FC and the air, the secondary loop (10) comprising at least one means (22) of diverting the coolant FC from an outlet point (21) at which the coolant FC is outlet from the third heat exchanger (14) to a point (23) at which the coolant FC is admitted into the fourth heat exchanger (15), **characterized in that** the outlet point (21) is connected to a mid point (26) situated on the secondary loop (10) between the first heat exchanger (8) and the second heat exchanger (9).

2. Installation (1) according to Claim 1, **characterized in that** the diversion means (22) consists of a line configured in a "Y" comprising an inlet E for the coolant FC which inlet is connected to the outlet point (21), a first outlet S1 which is connected to the midpoint (26) and a second outlet S2 which is connected to a point (23) at which the coolant FC is admitted into the fourth heat exchanger (15).

3. Installation (1) according to any one of the preceding claims, **characterized in that** the first heat exchanger (8) is arranged upstream of the second heat exchanger (9) in a direction (11) in which the refrigerant FR circulates through the air-conditioning loop (6).

4. Installation (1) according to any one of the preceding claims, **characterized in that** the third heat exchanger (14) comprises a coolant FC inlet point (19) which is in fluidic communication with a discharge orifice (20) via which the coolant FC is discharged from the first heat exchanger (8).

5. Installation (1) according to Claim 4, **characterized in that** the installation (1) comprises first means for maintaining a first flow rate of the coolant FC, of between 120 l/h and 300 l/h between the inlet point (19) and the outlet point (21).

6. Installation (1) according to Claim 5, **characterized in that** the first maintaining means comprise an arrangement in at least two passes of a first path (30) along which the coolant FC circulates through the third heat exchanger (14).

7. Installation (1) according to Claim 6, **characterized in that** the first maintaining means comprise an arrangement of the said first circulation path (30) in at least four passes.

8. Installation (1) according to any one of Claims 5 to 7, **characterized in that** the first maintaining means comprise a restriction (42) restricting the flow of the coolant FC, the restriction (42) being created upstream of the admission point (23).

9. Installation (1) according to any one of Claims 2 to 8, **characterized in that** the installation (1) comprises second means of maintaining a second flow rate of the coolant FC of between 40 l/h and 120 l/h between the admission point (23) and a discharge point (24) at which the coolant FC is discharged from the fourth heat exchanger (15).

10. Installation (1) according to any one of the preceding claims, **characterized in that** the installation (1) comprises a first line (35) housing the fourth heat exchanger (15) and at least a first portion (37) of the third heat exchanger (14).

11. Installation (1) according to Claim 10, **characterized in that** the first line (35) comprises an external air intake (36) in communication with the outside of the vehicle.

12. Installation (1) according to either one of Claims 10 and 11, **characterized in that** the installation (1) comprises a second line (39) comprising a recycled-air intake (43) in communication with the vehicle interior.

13. Installation (1) according to Claim 12, **characterized in that** the second line (39) houses a second portion (38) of the third heat exchanger (14).

14. Installation (1) according to Claim 13, **characterized in that** the second portion (38) can either be dissociated from or secured to the first portion (37), neither option being preferred over the other.

## Patentansprüche

1. Lüftungs-, Heizungs- und/oder Klimaanlage (1), die eine Klimatisierungsschleife (6), in deren Innerem ein Kühlmittel FR fließt, und eine Sekundärschleife (10) enthält, in deren Innerem ein Wärmeträger FC fließt, wobei die Anlage (1) einen ersten Wärmetauscher (8) zwischen dem Kühlmittel FR und dem Wärmeträger FC, einen zweiten Wärmetauscher (9) zwischen dem Kühlmittel FR und dem Wärmeträger FC enthält, die Sekundärschleife (10) einen dritten Wärmetauscher (14) zwischen dem Wärmeträger FC und der Luft und einen vierten Wärmetauscher (15) zwischen dem Wärmeträger FC und der Luft enthält, wobei die Sekundärschleife (10) mindestens eine Abzweigeinrichtung (22) des Wärmeträgers FC von einem Ausgangspunkt (21) des Wärmeträgers FC aus dem dritten Wärmetauscher (14) zu einem Einlasspunkt (23) des Wärmeträgers FC ins Innere des vierten Wärmetauschers (15) enthält, **dadurch gekennzeichnet, dass** der Ausgangspunkt (21) mit einem Mittelpunkt (26) verbunden ist, der sich auf der Sekundärschleife (10) zwischen dem ersten Wärmetauscher (8) und dem zweiten Wärmetauscher (9) befindet.

2. Anlage (1) nach Anspruch 1, **dadurch gekennzeichnet, dass** die Abzweigeinrichtung (22) aus einem «Y»-förmigen Kanal besteht, der einen Eingang E des Wärmeträgers FC, der mit dem Ausgangspunkt (21) verbunden ist, einen ersten Ausgang S1, der mit dem Mittelpunkt (26) verbunden ist, und einen zweiten Ausgang S2 enthält, der mit einem Einlasspunkt (23) des Wärmeträgers FC ins Innere des vierten Wärmetauschers (15) verbunden ist.

3. Anlage (1) nach einem der vorhergehenden Ansprüche, **dadurch gekennzeichnet, dass** der erste Wärmetauscher (8) vor dem zweiten Wärmetauscher (9) in einer Fließrichtung (11) des Kühlmittels FR innerhalb der Klimatisierungsschleife (6) angeordnet ist.

4. Anlage (1) nach einem der vorhergehenden Ansprüche, **dadurch gekennzeichnet, dass** der dritte Wärmetauscher (14) einen Eingangspunkt (19) des Wärmeträgers FC aufweist, der mit einer Entleerungsöffnung (20) des Wärmeträgers FC aus dem ersten Wärmetauscher (8) in Fluidverbindung steht.

5. Anlage (1) nach Anspruch 4, **dadurch gekennzeichnet, dass** die Anlage (1) erste Einrichtungen zur Beibehaltung einer ersten Durchflussmenge des Wärmeträgers FC, die zwischen dem Eingangspunkt (19) und dem Ausgangspunkt (21) abgenommen wird, zwischen 120 l/h und 300 l/h aufweist.

6. Anlage (1) nach Anspruch 5, **dadurch gekennzeichnet, dass** die ersten Beibehaltungseinrichtungen eine Gestaltung in mindestens zwei Durchgängen eines ersten Fließwegs (30) des Wärmeträgers FC innerhalb des dritten Wärmetauschers (14) enthalten.

7. Anlage (1) nach Anspruch 6, **dadurch gekennzeichnet, dass** die ersten Beibehaltungseinrichtungen eine Gestaltung in mindestens vier Durchgängen des ersten Fließwegs (30) enthalten.

8. Anlage (1) nach einem der Ansprüche 5 bis 7, **dadurch gekennzeichnet, dass** die ersten Beibehaltungseinrichtungen eine Drosselung (42) des Fließens des Wärmeträgers FC enthalten, wobei die Drosselung (42) vor dem Einlasspunkt (23) angeordnet ist.

9. Anlage (1) nach einem der Ansprüche 2 bis 8, **dadurch gekennzeichnet, dass** die Anlage (1) Einrichtungen zur Beibehaltung einer zweiten Durchflussmenge des Wärmeträgers FC, die zwischen dem Einlasspunkt (23) und einem Entleerungspunkt (24) des Wärmeträgers FC aus dem vierten Wärmetauscher (15) abgenommen wird, zwischen 40 l/h und 120 l/h enthält.

10. Anlage (1) nach einem der vorhergehenden Ansprüche, **dadurch gekennzeichnet, dass** die Anlage (1) einen ersten Kanal (35) enthält, der den vierten Wärmetauscher (15) und mindestens einen ersten Teil (37) des dritten Wärmetauschers (14) aufnimmt.

11. Anlage (1) nach Anspruch 10, **dadurch gekennzeichnet, dass** der erste Kanal (35) eine Außenluft-Einlassöffnung (36) in Verbindung mit der Außenumgebung des Fahrzeugs aufweist.

12. Anlage (1) nach einem der Ansprüche 10 und 11, **dadurch gekennzeichnet, dass** die Anlage (1) einen zweiten Kanal (39) enthält, der eine Umwälzluft-Einlassöffnung (43) in Verbindung mit dem Fahrzeuginnenraum aufweist.

13. Anlage (1) nach Anspruch 12, **dadurch gekennzeichnet, dass** der zweite Kanal (39) einen zweiten Teil (38) des dritten Wärmetauschers (14) aufnimmt.

14. Anlage (1) nach Anspruch 13, **dadurch gekennzeichnet, dass** der zweite Teil (38) unterschiedslos vom ersten Teil (37) getrennt oder fest damit verbunden ist.
